# EUROPEAN PATENT APPLICATION

(11) **EP 4 353 390 A1**
(43) Date of publication of application: **17.04.2024**
(21) Application number: 23198800.7
(22) Date of filing: 21.09.2023
(51) Int. Cl.: B23K 9/10, B23K 9/12, B23K 9/32

(54) **WELDING SYSTEM, WELDING POWER SUPPLY AND WELDING WIRE FEEDER EMPLOYING DEDICATED POWER AND COMMUNICATION CABLE AND CONNECTIONS CIRCUITRIES**

(30) Priority: 23.09.2022 US 202263409250 P; 18.09.2023 US 202318468860
(71) Applicant: Illinois Tool Works Inc., Glenview, IL 60025 (US)
(72) Inventor: OTT, Brian, Glenview, 60025 (US); SCHARTNER, Quinn, Glenview, 60025 (US)
(74) Representative: HGF

(57) **Abstract**

The present application relates to a welding system (100) comprising a welding power supply (10), and a welding cable (14, 54) to provide welding power, communication signals, and wire feeder power to the wire feeder (12), and a single conductor wire feeder power and communication cable (54) coupling the welding power supply (10) to the wire feeder (12) via dedicated connection circuitry (34, 37) in both the welding power supply (10) and the wire feeder (12).

## Description

### CROSS REFERENCE TO RELATED APPLICATIONS

This application is a Non-Provisional Patent Application of U.S. Provisional Patent Application No. 63/409,250 entitled "Welding Systems And Methods Employing A Dedicated Power And Communication Cable" filed September 23, 2022, which is herein incorporated by reference in its entirety.

### BACKGROUND

Welding is a process that has increasingly become ubiquitous in nearly all industries. Conventional systems and methods for short circuit welding processes, such as welding, brazing, adhesive bonding, and/or other joining operations, require substantial investments in equipment, such as processing, displays, practice workpieces, welding tool(s), sensor(s), and/or other equipment.

Conventional welding systems use complex cabling between power supplies and auxiliary devices. Such cabling is often expensive, heavy, and subject to damage on the worksite.

Thus, systems and methods that provide effective and simple transmission of power and/or control of a welding systems is desirable.

### SUMMARY

The present disclosure is directed to systems and methods that employ a welding cable to provide welding power, communication signals, and wire feeder power to the wire feeder, and a single conductor wire feeder power and communication cable coupling the welding power supply to the wire feeder via dedicated connection circuitry in both the welding power supply and the wire feeder, substantially as illustrated by and/or described in connection with at least one of the figures, and as set forth in the claims.

These and other advantages, aspects and novel features of the present disclosure, as well as details of an illustrated example thereof, will be more fully understood from the following description and drawings.

### DRAWINGS

FIG. 1 illustrates a welding-type system employing a single conductor wire feeder power and communication cable, in accordance with aspects of this disclosure.
FIG. 2 provides a simplified diagram of the example system of FIG. 1 employing a single conductor wire feeder power and communication cable, in accordance with aspects of this disclosure.

The figures are not necessarily to scale. Where appropriate, similar or identical reference numbers are used to refer to similar or identical components.

### DETAILED DESCRIPTION

The present disclosure is directed to systems and methods that employ a welding cable to provide welding power, communication signals, and wire feeder power to the wire feeder, and a single conductor wire feeder power and communication cable coupling the welding power supply to the wire feeder via dedicated connection circuitry in both the welding power supply and the wire feeder. For example, each connection circuitry includes communication and power conversion circuitry, and is operable to provide control signals and operational power for components of the wire feeder separate from the welding cable. As a result, components of the wire feeder, such as the roller motor, interface circuitry, communications, etc., can be powered and controlled in the absence of welding power at the wire feeder.

Conventionally, two example types of wire feeders and/or welding accessories are available for use in welding systems.

One is a remote control or corded wire feeder. In this example, a welding cable provides welding power to a contact tip to electrify an electrode. Additionally, a multi-conductor control cable is used to provide power to operate the wire feeder (e.g., activate the drive rolls). Additionally conductors of the control cable are used for control and communication between the wire feeder and welding power source. Some example systems of this type employ analog signaling across the welding cable to provide control or other data between the wire feeder and the welding power source, while some example systems employ digital communications.

Another type of system is a voltage-sensing capable system. For example, voltage-sensing wire feeders are powered via a welding arc or an open circuit voltage at the connected power source. Volt-sensing wire feeders are used in situations where the wire feeder is located a significant distance from the power source and the relatively complex remote-control cable is not acceptable in many applications, for example, due to likelihood for damage within the environment.

Notable features of voltage-sensing type wire feeders are inclusion of an electromechanical or welding contactor to complete the weld circuit, and replacement of the control cable with a localized voltage-sensing lead. Such a lead allows the wire feeder to connect to both the workpiece and the electrode wire to facilitate derivation of power via the arc.

Some voltage-sensing type wire feeders lack the ability to provide the user with communication and/or control of the power source from the wire feeder due to a lack of user control signals and/or communication cables. Some example wire feeders are configured for limited communication over the welding cable to allow rudimentary controls at the wire feeder.

However, the many limitations of these wire feeder types leaves a number of features to be desired in some applications. For example, some employ voltage-sensing wire feeders but suffer from limited control capabilities at the wire feeder.

Some applications employing remotely controlled wire feeders use cables susceptible to damage from the work environment, degrading performance of the volt-sensing lead. For example, common worksite activities can cause damage to the weld cable. A multi-connector weld cable is expensive and cannot be easily repaired, therefore requiring replacement of an often long and expensive cable.

By contrast, the present disclosure provides a welding system employing a single conductor cable to connect a welding power supply and welding wire feeder, providing communications and/or power for the wire feeder. Such a cable is more cost effective, easier to manufacture, and is more easily repaired and/or replaced on-site.

Advantageously, the disclosed systems and methods provides control and power to a welding wire feeder, distinct from arc welding power, with additional of a robust cable (e.g., single conductor wire feeder power and communication cable). Moreover, electrical and/or physical isolation between the wire feeder drive power circuit and the arc welding power (to the torch) allows the high current arc welding power to be reduced and/or shut off completely, while maintaining power and/or communications capabilities at the wire feeder via the single conductor wire feeder power and communication cable. The electrical isolation between wire feeder operational power and welding power therefore reduces and/or eliminates separation circuitry, such as a welding contactor at the wire feeder, typically associated with a volt-sensing wire feeder.

The use of the single conductor wire feeder power and communication cable makes employing a voltage-sensing lead optional. For instance, the lead can be employed to collect additional data regarding power output characteristics, but control of the wire feeder is powered by the single conductor wire feeder power and communication cable, rather than the arc welding power.

In disclosed examples, a welding system includes a welding power supply that includes first connection circuitry; a wire feeder that includes second connection circuitry; a welding cable to provide welding power, communication signals, and wire feeder power to the wire feeder; and a single conductor wire feeder power and communication cable coupling the welding power supply to the wire feeder via the first connection circuitry and the second connection circuitry.

In some examples, the first connection circuitry includes first communication circuitry and first power conversion circuitry. In examples, the second connection circuitry includes second communication circuitry and second power conversion circuitry. In examples, the single conductor power and communication cable transmits wire feeder power to drive the wire feeder from the first power conversion circuitry to the second power conversion circuitry. In examples, the single conductor power and communication cable transmits data between the first control circuitry and the second control circuitry.

In some examples, the single conductor wire feeder power and communication cable is a second weld cable.

In some examples, the single metallic conductor comprises an 18 gauge conductor or a wire gauge similar to the weld cable.

In some examples, the wire feeder further comprises a user interface and communication circuitry powered by the control power via the single conductor wire feeder power and communication cable.

In some disclosed examples, a welding power supply includes a welding output to transmit, via a welding cable, welding power to power a welding torch, and communication signals and wire feeder power to a wire feeder; and first connection circuitry to transmit power and control data to second connection circuitry of the wire feeder, the first connection circuitry and the second connection circuitry coupled via a single conductor wire feeder power and communication cable.

In some examples, the first connection circuitry is electrically or physically isolated from the welding output. In examples, the second connection circuitry is further configured to communicate the commands to the first connection circuitry via one or more of weld cable communications (WCC), wireless communications, wired communications, or any combination thereof.

In some examples, the wire feeder is located remotely from the welding power supply and proximate to the welding torch. In some examples, the welding torch includes a welding torch to perform a welding operation or a gouging torch to perform a gouging operation.

In some examples, the welding power supply includes a first power conversion circuitry to condition the welding power for transmission to an electrode wire through the welding torch at an electrified contactor tip via the welding cable.

In some disclosed examples, a welding wire feeder includes a first welding connection to receive welding power, communication signals, and wire feeder power from a welding power supply via a welding cable; a second welding connection to provide the welding power or communication signals to a welding torch; and first connection circuitry to transmit or receive wire feeder power and data to or from second connection circuitry of the welding power supply, the first connection circuitry and the second connection circuitry coupled via a single conductor wire feeder power and communication cable.

In some examples, the first connection circuitry includes first communication circuitry and first power conversion circuitry. In examples, the second connection circuitry includes second communication circuitry and second power conversion circuitry. In examples, the single conductor power and communication cable transmits wire feeder power to drive the wire feeder from the first power conversion circuitry to the second power conversion circuitry.

In some examples, the single metallic conductor comprises an 18 gauge conductor or a wire gauge similar to the weld cable.

In some examples, the welding wire feeder includes a user interface and communication circuitry powered by the control power via the single conductor wire feeder power and communication cable.

The term "welding-type system," as used herein, includes any device capable of supplying power suitable for welding, plasma cutting, induction heating, Carbon Arc Cutting-Air (e.g., CAC-A, or gouging), and/or hot wire welding/preheating (including laser welding and laser cladding), including inverters, switched-mode power supplies, converters, choppers, resonant power supplies, quasi-resonant power supplies, etc., as well as control circuitry and other ancillary circuitry associated therewith.

As used herein, the terms "welding power", "welding-type power" and/or "arc welding power" refers to power suitable for welding, plasma cutting, induction heating, CAC-A and/or hot wire welding/preheating (including laser welding and laser cladding).

As used herein, the term "welding-type power supply" and/or "power supply" refers to any device capable of, when power is applied thereto, supplying welding, plasma cutting, induction heating, CAC-A and/or hot wire welding/preheating (including laser welding and laser cladding) power, including but not limited to inverters, switched-mode power supplies, converters, resonant power supplies, quasi-resonant power supplies, and the like, as well as control circuitry and other ancillary circuitry associated therewith. The term can include engine driven power supplies, energy storage devices, and/or circuitry and/or connections to draw power from a variety of external power sources.

As used herein, the term "wire feeder" includes the motor or mechanism that drives the wire, the mounting for the wire, and controls related thereto, and associated hardware and software.

As used herein, the term "torch," "welding torch," "welding tool" or "welding-type tool" refers to a device configured to be manipulated to perform a welding-related task, and can include a hand-held welding torch, robotic welding torch, gun, gouging tool, cutting tool, or other device used to implement a welding process.

As used herein, a "circuit," or "circuitry," includes any analog and/or digital components, power and/or control elements, such as a microprocessor, digital signal processor (DSP), software, and the like, discrete and/or integrated components, or portions and/or combinations thereof.

The terms "control circuit," "control circuitry," and/or "controller," as used herein, may include digital and/or analog circuitry, discrete and/or integrated circuitry, microprocessors, digital signal processors (DSPs), Field Programmable Gate Arrays (FPGAs), and/or other logic circuitry, and/or associated software, hardware, and/or firmware. Control circuits or control circuitry may be located on one or more circuit boards that form part or all of a controller, and are used to control a welding process, a device such as a power source or wire feeder, and/or any other type of welding-related system.

As used herein, the term "memory" includes volatile and non-volatile memory devices and/or other storage device.

As used herein, the term "energy storage device" is any device that stores energy, such as, for example, a battery, a supercapacitor, etc.

As used herein, the term "welding mode," "welding process," "welding-type process" or "welding operation" refers to the type of process or output used, such as current-controlled (CC), voltage-controlled (CV), pulsed, gas metal arc welding (GMAW), flux-cored arc welding (FCAW), gas tungsten arc welding (GTAW, e.g., TIG), shielded metal arc welding (SMAW), spray, short circuit, CAC-A, gouging process, plasma cutting, cutting process, and/or any other type of welding process.

As used herein, the term "welding program" or "weld program" includes at least a set of welding parameters for controlling a weld. A welding program may further include other software, algorithms, processes, or other logic to control one or more welding-type devices to perform a weld.

As used herein, "power conversion circuitry" and/or "power conversion circuits" refer to circuitry and/or electrical components that convert electrical power from one or more first forms (e.g., power output by a generator) to one or more second forms having any combination of voltage, current, frequency, and/or response characteristics. The power conversion circuitry may include safety circuitry, output selection circuitry, measurement and/or control circuitry, and/or any other circuits to provide appropriate features.

As used herein, the term "boost converter" is a converter used in a circuit that boosts a voltage. For example, a boost converter can be a type of step-up converter, such as a DC-to-DC power converter that steps up voltage while stepping down current from its input (e.g., from the energy storage device) to its output (e.g., a load and/or attached power bus). It is a type of switched mode power supply.

As used herein, the term "buck converter" (e.g., a step-down converter) refers to a power converter which steps down voltage (e.g., while stepping up current) from its input to its output.

As used herein, the terms "first" and "second" may be used to enumerate different components or elements of the same type, and do not necessarily imply any particular order.

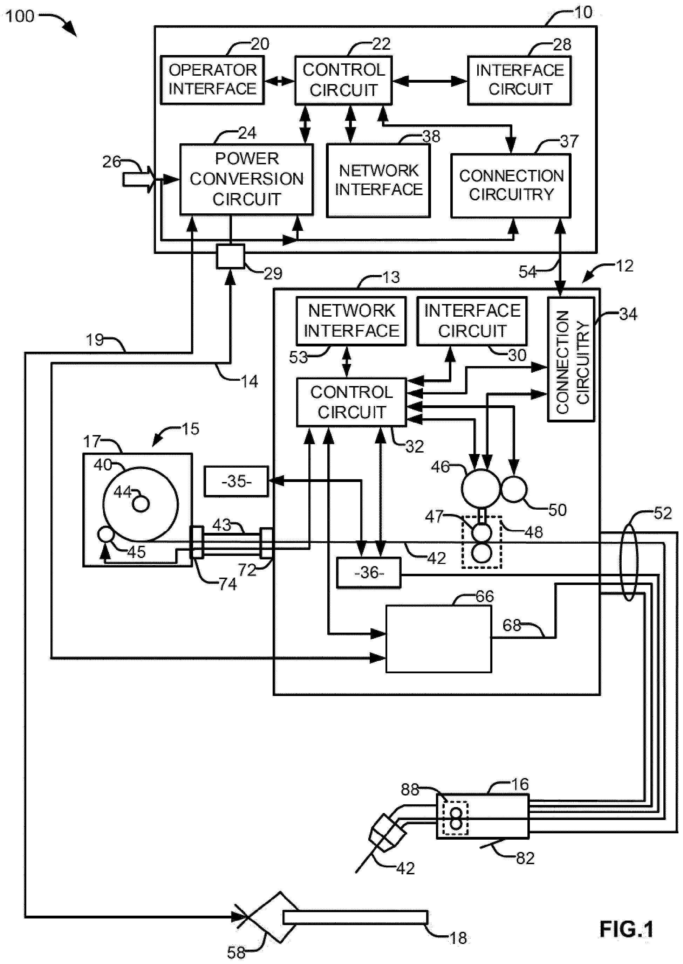

FIG. 1 illustrates an example welding system 100 for performing welding operations. As shown in the welding system 100 of FIG. 1, a power supply 10 and a wire feeder 12 are coupled via conductors or conduits 14. In the illustrated example, the power supply 10 is separate from the wire feeder 12, such that the wire feeder 12 may be positioned near a welding location at some distance from the power supply 10. Terminals are typically provided on the power supply 10 and on the wire feeder 12 to allow the conductors 14 (e.g., a multi-conductor, multi-pin welding cable, such as a 14-18 pin connector cable) to be coupled to the systems so as to allow for welding power, wire feeder power, and/or gas to be provided to the wire feeder 12 from the power supply 10, and to allow data to be exchanged between the two devices.

The system 100 is configured to provide wire from a welding wire source 15, power from the power supply 12, and shielding gas from a shielding gas supply 35, to a welding tool or torch 16. The torch 16 may be any type of arc welding torch, (e.g., GMAW, GTAW, FCAW, SMAW) and may allow for the feed of a welding wire 42 (e.g., an electrode wire) and gas to a location adjacent to a workpiece 18, responsive to a trigger 82. A work cable 19 is run to the welding workpiece 18 so as to complete an electrical circuit between the power supply 10 and the workpiece 18.

The welding system 100 is configured for weld settings (e.g., weld parameters, such as voltage, wire feed speed, current, gas flow, inductance, physical weld parameters, advanced welding programs, pulse parameters, etc.) to be selected by the operator and/or via a welding sequence, such as via an operator interface 20 provided on the power supply 10. The operator interface 20 will typically be incorporated into a front faceplate of the power supply 10, and may allow for selection of settings such as the weld process, the type of wire to be used, voltage and current settings, and so forth. In particular, the example system 100 is configured to allow for welding with various steels, aluminums, or other welding wire that is channeled through the torch 16. Further, the system 100 is configured to employ welding wires with a variety of wire sizes. These weld settings are communicated to a control circuit 22 within the power supply 10. The system may be particularly adapted to implement welding regimes configured for certain electrode types. The control circuit 22 operates to control generation of welding power output that is supplied to the welding wire 42 for carrying out the desired welding operation.

The torch 16 applies power from the power supply 10 to the wire electrode 42, typically by a welding cable 52. Similarly, shielding gas from a shielding gas supply 35 is fed through the wire feeder 12 and the welding cable 52. During welding operations, the welding wire 42 is advanced through a jacket of the welding cable 52 towards the torch 16.

The work cable 19 and clamp 58 allow for closing an electrical circuit from the power supply 10 through the welding torch 16, the electrode (wire) 42, and the workpiece 18 for maintaining the welding arc during the operation. In addition to torch 16 in some examples multiple torches of a variety of types may be connected to the wire feeder 12. In examples, a gouging or cutting torch may be separately connected to the wire feeder 12 and/or the power supply 10.

In some examples, the wire feeder 12 is a voltage sensing wire feeder. A work sensing line can be coupled to the power supply 10 and the work piece 18 to enable the power supply 10 to detect the polarity even when no welding operation is active. More specifically, the work sensing line completes an electrical circuit between the power supply 10, the wire feeder 12, the work piece 18, and back to the power supply 10 to enable the polarity to be detected. For example, detection of the polarity may include sensing a voltage of an output from power conversion circuitry 66, a current flowing through the cables 68 to the torch 16, or both.

As shown, the torch 16 includes a trigger 82 to control activation of the torch 16 to perform a welding operation. In some examples, an interface to control the torch 16 may be located on the wire feeder 12, the power supply 10, and/or on a body of the torch 16. When a CAC-A torch is employed, a selector may additionally or alternatively be arranged on the torch or along a length of tubing that provides air flow to the torch from a compressor (e.g., from a compressed air source) configured to draw power from the power conversion circuit 24, 66 and/or an alternative power source (e.g., an energy storage device, mains power, etc.).

The control circuit 22 is coupled to power conversion circuit 24. This power conversion circuit 24 is adapted to create the output power, such as pulsed waveforms applied to the welding wire 42 at the torch 16. Various power conversion circuits may be employed, including choppers, boost circuitry, buck circuitry, inverters, switched-mode power supplies, converters, and/or other switched mode power supply circuitry, and/or any other type of power conversion circuitry. The power conversion circuit 24 is coupled to a source of electrical power as indicated by arrow 26. The power applied to the power conversion circuit 24 may originate in the power grid, although other sources of power may also be used, such as power generated by an engine-driven generator, batteries, fuel cells or other alternative sources. The power supply 10 illustrated in FIG. 1 may also include an interface circuit 28 configured to allow the control circuit 22 to exchange signals with the wire feeder 12 and/or other auxiliary devices.

The wire feeder 12 includes a complimentary interface circuit 30 that is coupled to the interface circuit 28. In some examples, multi-pin interfaces may be provided on both components and a multi-conductor cable run between the interface circuit to allow for such information as wire feed speeds, processes, selected currents, voltages or power levels, and so forth to be set on either the power supply 10, the wire feeder 12, or both. Additionally or alternatively, the interface circuit 30 and the interface circuit 28 may communicate wirelessly and/or via the weld cable. In some examples, power supply 10 may communicate with the wire feeder 12 (and or another remote device) using weld cable communications (WCC) through the welding torch cable 14.

The wire feeder 12 also includes control circuit 32 coupled to the interface circuit 30. As described below, the control circuit 32 allows for wire feed speeds to be controlled in accordance with operator selections or stored sequence instructions, and permits these settings to be fed back to the power supply 10 via the interface circuit. The control circuit 32 is coupled to connection circuitry 34 on the wire feeder that allows selection of one or more welding parameters, such as wire feed speed. The operator interface may also allow for selection of such weld parameters as the welding process type (including arc welding operation and/or gouging operation), the type of wire utilized, current, voltage or power settings, and so forth.

In some examples, a memory device may store processor executable instructions (e.g., firmware or software) for the control circuitry 22 or control circuitry 32 to execute. In addition, one or more control regimes for various welding processes (e.g., MIG or GTAW welding process, CAC-A plasma cutting, etc.), along with associated settings and parameters, may be stored in the memory device, along with code configured to provide a specific output (e.g., output power, power characteristics, change in polarity, initiate wire feed or set wire feeder speed, enable gas flow, wire feeder direction, travel speed, process mode, deposition path, deposition sequence, torch angle, etc.) during operation. One or more lists or look up tables may be provided, and/or network connections to various databases available to inform decision-making, such as to access preferred output parameters, to store updated parameter settings, etc.

In some examples, the wire feeder 12 includes one or more power conversion circuits 66, which may be similar to power conversion circuit 24. For instance, the power conversion circuit(s) 66 in the wire feeder 12 may include choppers, boost circuitry, buck circuitry, inverters, switched-mode power supplies, converters, and/or other switched mode power supply circuitry, and/or any other type of power conversion circuitry to control power output to the welding torch 16, gouge torch 76, other types of welding tool, and/or one or more auxiliary outputs.

The control circuit 32 may also be coupled to gas control valving 36 which regulates and/or measures the flow of shielding gas from the shielding gas supply 35 to the torch 16. In general, such gas is provided at the time of welding, and may be turned on immediately preceding the weld and for a short time following the weld. The shielding gas supply 35 may be provided in the form of pressurized bottles.

The wire feeder 12 includes components for feeding wire to the welding torch 16 and thereby to the welding operation, under the control of control circuit 32. As illustrated, the drive components and control components of the wire feeder 12 are included within a first housing or enclosure 13. In some examples, a spool of wire 40 is mounted on a spool hub 44 in a second housing or enclosure 17. The wire source 15 may be integrated with the wire feeder 12. In some examples, the wire source 15 is physically independent from the wire feeder 12. In other words, the wire source 15 is connectable to and disconnectable from the wire feeder 12, and the wire source 15 can be physically moved independently from the wire feeder 12.

In some examples, the spool hub 40 is configured to support up to a sixty pound spool of wire and the enclosure 17 is large enough to enclose a sixty pound spool of wire. An inlet 72 of the wire feeder 12 is connected to an outlet 74 of the wire source 15 via one or more connectors 43. In some examples, the wire feeder inlet 72 is directly connected to the wire source outlet 74. For example, the wire feeder inlet 72 may include a first connector that directly connects to a second connector of the wire source outlet 74. For example, the wire feeder inlet 72 may connect to the wire source outlet 74 via quick disconnect connectors or the like through which wire from the spool 40 may be fed. In some examples, a conduit may connect the wire feeder inlet 72 to the wire source outlet 74. In some examples, the conduit is flexible (e.g., similar to a weld cable). In some examples, the conduit may be a rigid conduit. The connectors 43 enable welding wire 42 from the spool 40 to be fed to the drive components of the wire feeder 12. The connectors 43 may also enable one or more control cables to be connected from components within the wire source enclosure 17 to the control circuit 32.

Welding wire 42 is unspooled from the spool 40 and is progressively fed to the torch 16. The spool 40 may be associated with a clutch 45 that disengages the spool 40 when wire is to be fed from the spool 40 to the torch 16. The clutch 45 may also be regulated, for example by the control circuit 32, to maintain a minimum friction level to avoid free spinning of the spool 40. The first wire feeder motor 46 engages with wire feed rollers 47 that may be provided within a housing 48 to push wire 42 from the wire feeder 12 towards the torch 16.

In practice, at least one of the rollers 47 is mechanically coupled to the motor 46 and is rotated by the motor 46 to drive the wire from the wire feeder 12, while the mating roller is biased towards the wire to apply adequate pressure by the two rollers to the wire. Some systems may include multiple rollers of this type. In some examples, the wire feeder 12 is configured to feed 1/8 inch wire. In some examples, the wire feeder 12 is configured to feed 3/32 inch wire, or any other suitable size or type of wire.

A tachometer 50 or other sensor may be provided for detecting the speed of the first wire feeder motor 46, the rollers 47, or any other associated component so as to provide an indication of the actual wire feed speed. Signals from the tachometer 50 are fed back to the control circuit 32 such that the control circuit 32 can track the length of wire that has been fed. The length of wire may be used directly to calculate consumption of the wire and/or the length may be converted to wire weight based on the type of wire and its diameter.

In some examples, a second wire feeder 88 is included. The wire feeder 88 may be incorporated within the torch 16 and/or at a location along the path of the electrode wire 42. The wire feeder 88 may be controlled by the control circuitry 32 to coordinate with wire feed rollers 47 to advance and/or retract the electrode wire 42 based on a desired application.

As shown in FIG. 1, the power supply 10 includes a first connection circuitry 37, which is connected to a power source 26, power conversion circuitry 24, control circuitry 22, the operator interface 20, the interface circuitry 28, and/or the network interface 38. The connection circuitry 37 is configured to provide power and/or communications to a second connection circuitry 34 arranged at the wire feeder 12. In the example of FIG. 1, the first and second connection circuitry are coupled via a single conductor wire feeder power and communication cable 54. In some examples, the connection circuitry 37 is physically and/or electrically isolated from welding output 29 (e.g., welding studs, receptacle, etc.).

The second connection circuitry 34 is connected to one or more of the control circuitry 32, the network interface 53, the interface circuit 30, and/or the wire feeder motor 46. In some examples, the connection circuitry 34 and/or the control circuitry 32 includes communication circuitry (e.g., interface circuit 30, network interface 56, or other suitable circuitry) to transmit and/or receive data communications between the welding power supply 10 and the wire feeder 12. The data communications may include control information from the welding power supply 10 to operate the wire feeder 12, or vice versa. Accordingly, power to operate the rollers 47 and/or the various circuits and interfaces, including to receive and/or transmit data, can be provided to the wire feeder 12 via the wire feeder power and communication cable 54. In some examples, the cable 54 includes a single metallic conductor, such as an 18 gauge conductor, a wire gauge similar to the weld cable, or any other suitable gauge. In some examples, the cable 54 is a weld cable employed for communication and power transmission to and from the wire feeder 12. In some examples, the cable 54 is capable of transmitting data at a higher bit rate than a conventional transmission cable (e.g., a multi-cable), on the order of double the rate, or conceivably an order of magnitude greater or more. This improvement in bit rate transmission is due in large part to the size of the conductor(s) and/or the limited number of signals being transmitted through the single conductor (or multiple conductors) of the cable 54. Moreover, running the cables separately limits interference in a cable from current from the other.

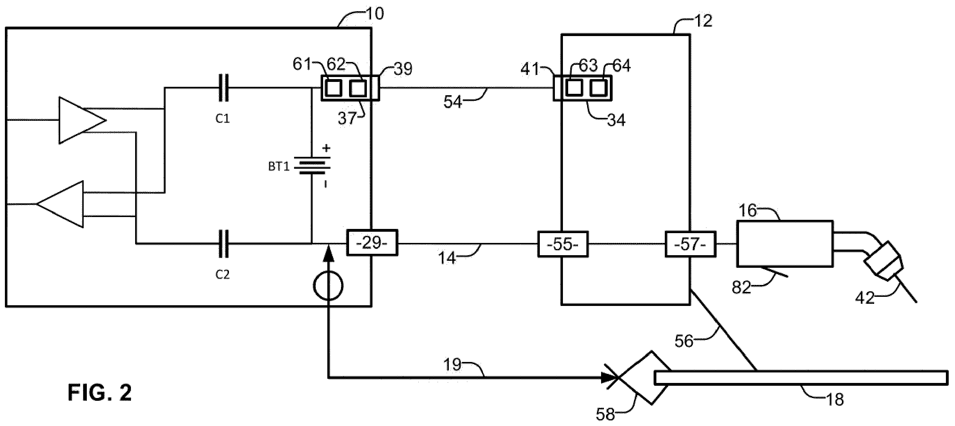

As illustrated in FIG. 2, the wire feeder power and communication cable 54 can be connected to the power supply 10 and the wire feeder 12 via interconnects 39 and 41, respectively. As shown, connection circuit 34 includes first communication circuitry 61 and first power circuitry 62, and connection circuit 37 includes second communication circuitry 63 and second power circuitry 64. These complementary circuits are connected via the cable 54, and are used to communicate data and distribute power. In some examples, the interconnects 39 and 41 can include electrical outlets, bolt connectors, studs, quick connects, and/or other suitable connection ports. Due to the simplicity of the cabling, the interconnects allow for a robust connection, are simple to repair, and are low cost all the while providing direct and advanced communication and control capabilities between the power supply 10 and the wire feeder 12.

Although a volt-sensing lead is not required at the wire feeder 12 to receive the benefits of volt-sensing capabilities, such a lead 56 could be provided for specific applications or to access certain features, such as load voltage measurement and cable length compensation operations.

In some examples, the connection circuitry 34 is physically and/or electrically isolated from any welding connections 55 and 57 (e.g., welding studs, receptacle, etc.) operable to connect the weld cable 14 to the wire feeder 12 and/or connect the torch 16 to the wire feeder 12, respectively.

In some examples, the wire feeder power and communication cable 54 provides a single conductor operable to carry both power and data. In some examples, multiple conductors are provided. The wire feeder power and communication cable 54 may be sheathed in one or more insulative layers, and/or protective outer layers to protect the conductors from environmental damage.

By contrast to conventional wire feeders, employing the wire feeder power and communication cable 54 provides power to the components of the wire feeder 12 separate from the welding power provided via the welding cable 14. Conventional wire feeders include a welding contactor to open the weld circuit when the torch is not in use, but power is still needed at the wire feeder to operate controls and/or to present information. In other words, the full power from the welding power supply would flow through the welding cable and to the wire feeder to maintain power at the control panel, even as welding is not being performed. Moreover, the welding contactor is rated for high power and high current, is heavy and expensive.

Advantageously, the wire feeder power and communication cable 54 allows the wire feeder 12 to operate without the use of a heavy, expensive welding contactor. This is possible because the power provided via cable 54 is sufficient to drive the rollers 47 and to enable the command and display functions via the various circuits. Therefore, the disclosed system 100 can be manufactured and operated without the welding contactor, and can be operated without the need for welding power to flow to the wire feeder.

In some additional or alternative examples, power and/or data communications for the wire feeder 12 can be delivered via both the single conductor 54 and the welding cable 14. For instance, during certain operations (e.g., when the welding torch 16 is not active), power and/or data can be transmitted via the welding cable 14. If welding power is being transmitted over the cable 14, such that data signal quality to the wire feeder 12 is degraded, transmissions may be alternately or selectively delivered over the conductor 54.

In some examples, power and/or data communications for the wire feeder 12 are delivered via a combination of the single conductor 54, the volt sense lead 56, and the work cable 19. Advantageously, employing the volt sense lead 56 and work cable 19 results in transmissions with lower circuit inductance and resistance (e.g., in comparison to some example configurations), however a volt sense lead is additionally employed in this configuration.

In some examples, power for the wire feeder 12 can be delivered via one or more of weld cable 14, volt sense lead 56 and/or work cable 19, while wire feeder data communications are delivered via the single conductor 54 and existing electrode lead 14 (and/or work cable 19). Advantageously, delivering wire feeder power and communication over different cables or circuit paths removes complexity and reduces the opportunity for signal degradation. In such examples, the wire feeder 12 may employ the volt sense lead 56, as well as incorporate a contactor (e.g., a high power/amperage weld contactor) in order to isolate a welding power circuit from torch 42.

Certain embodiments of the invention are described in the following numbered clauses:
Clause 1. A welding system, comprising:
   a welding power supply that includes first connection circuitry;
   a wire feeder that includes second connection circuitry;
   a welding cable to provide welding power, communication signals, and wire feeder power to the wire feeder; and
   a single conductor wire feeder power and communication cable coupling the welding power supply to the wire feeder via the first connection circuitry and the second connection circuitry.
Clause 2. The welding system of clause 1, wherein the first connection circuitry includes first communication circuitry and first power conversion circuitry.
Clause 3. The welding system of clause 2, wherein the second connection circuitry includes second communication circuitry and second power conversion circuitry.
Clause 4. The welding system of clause 3, wherein the single conductor power and communication cable transmits wire feeder power to drive the wire feeder from the first power conversion circuitry to the second power conversion circuitry.
Clause 5. The welding system of clause 3, wherein the single conductor power and communication cable transmits data between the first control circuitry and the second control circuitry.
Clause 6. The welding system of clause 1, wherein the single conductor wire feeder power and communication cable is a second weld cable.
Clause 7. The welding system of clause 1, wherein the single metallic conductor comprises an 18 gauge conductor or a wire gauge similar to the weld cable.
Clause 8. The welding system of clause 1, wherein the wire feeder further comprises a user interface and communication circuitry powered by the control power via the single conductor wire feeder power and communication cable.
Clause 9. A welding power supply, comprising:
   a welding output to transmit, via a welding cable, welding power to power a welding torch, and communication signals and wire feeder power to a wire feeder; and
   first connection circuitry to transmit power and control data to second connection circuitry of the wire feeder, the first connection circuitry and the second connection circuitry coupled via a single conductor wire feeder power and communication cable.
Clause 10. The welding power supply of clause 9, wherein the first connection circuitry is electrically or physically isolated from the welding output.
Clause 11. The welding power supply of clause 9, wherein the second connection circuitry is further configured to communicate the commands to the first connection circuitry via one or more of weld cable communications (WCC), wireless communications, wired communications, or any combination thereof.
Clause 12. The welding power supply of clause 9, wherein the wire feeder is located remotely from the welding power supply and proximate to the welding torch.
Clause 13. The welding power supply of clause 9, wherein the welding torch includes a welding torch to perform a welding operation or a gouging torch to perform a gouging operation.
Clause 14. The welding power supply of clause 9, further comprising a first power conversion circuitry to condition the welding power for transmission to an electrode wire through the welding torch at an electrified contactor tip via the welding cable.
Clause 15. A welding wire feeder, comprising:
   a first welding connection to receive welding power, communication signals, and wire feeder power from a welding power supply via a welding cable;
   a second welding connection to provide the welding power or communication signals to a welding torch; and
   first connection circuitry to transmit or receive wire feeder power and data to or from second connection circuitry of the welding power supply, the first connection circuitry and the second connection circuitry coupled via a single conductor wire feeder power and communication cable.
Clause 16. The welding wire feeder of clause 15, wherein the first connection circuitry includes first communication circuitry and first power conversion circuitry.
Clause 17. The welding wire feeder of clause 16, wherein the second connection circuitry includes second communication circuitry and second power conversion circuitry.
Clause 18. The welding wire feeder of clause 17, wherein the single conductor power and communication cable transmits wire feeder power to drive the wire feeder from the first power conversion circuitry to the second power conversion circuitry.
Clause 19. The welding wire feeder of clause 1, wherein the single metallic conductor comprises an 18 gauge conductor or a wire gauge similar to the weld cable.
Clause 20. The welding wire feeder of clause 1, further comprising a user interface and communication circuitry powered by the control power via the single conductor wire feeder power and communication cable.

As utilized herein the terms "circuits" and "circuitry" refer to physical electronic components (i.e. hardware) and any software and/or firmware ("code") which may configure the hardware, be executed by the hardware, and or otherwise be associated with the hardware. As used herein, for example, a particular processor and memory may comprise a first "circuit" when executing a first one or more lines of code and may comprise a second "circuit" when executing a second one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y and/or z" means "one or more of x, y and z". As utilized herein, the term "exemplary" means serving as a non-limiting example, instance, or illustration. As utilized herein, the terms "e.g.," and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by a user-configurable setting, factory trim, etc.).

While the present method and/or system has been described with reference to certain implementations, it will be understood by those skilled in the art that various changes may be made and equivalents may be substituted without departing from the scope of the present method and/or system. For example, block and/or components of disclosed examples may be combined, divided, re-arranged, and/or otherwise modified. In addition, many modifications may be made to adapt a particular situation or material to the teachings of the present disclosure without departing from its scope. Therefore, the present method and/or system are not limited to the particular implementations disclosed. Instead, the present method and/or system will include all implementations falling within the scope of the appended claims, both literally and under the doctrine of equivalents.

## Claims

1. A welding system, comprising:
a welding power supply that includes first connection circuitry;
a wire feeder that includes second connection circuitry;
a welding cable to provide welding power, communication signals, and wire feeder power to the wire feeder; and
a single conductor wire feeder power and communication cable coupling the welding power supply to the wire feeder via the first connection circuitry and the second connection circuitry.

2. The welding system of claim 1, wherein the first connection circuitry includes first communication circuitry and first power conversion circuitry.

3. The welding system of claim 2, wherein the second connection circuitry includes second communication circuitry and second power conversion circuitry.

4. The welding system of claim 3, wherein the single conductor power and communication cable transmits wire feeder power to drive the wire feeder from the first power conversion circuitry to the second power conversion circuitry.

5. The welding system of claim 3, wherein the single conductor power and communication cable transmits data between the first control circuitry and the second control circuitry.

6. The welding system of claim 1, wherein the single conductor wire feeder power and communication cable is a second weld cable or
wherein the single metallic conductor comprises an 18 gauge conductor or a wire gauge similar to the weld cable, or wherein the wire feeder further comprises a user interface and communication circuitry powered by the control power via the single conductor wire feeder power and communication cable.

7. A welding power supply, comprising:
a welding output to transmit, via a welding cable, welding power to power a welding torch, and communication signals and wire feeder power to a wire feeder; and
first connection circuitry to transmit power and control data to second connection circuitry of the wire feeder, the first connection circuitry and the second connection circuitry coupled via a single conductor wire feeder power and communication cable.

8. The welding power supply of claim 7, wherein the first connection circuitry is electrically or physically isolated from the welding output.

9. The welding power supply of claim 7, wherein the second connection circuitry is further configured to communicate the commands to the first connection circuitry via one or more of weld cable communications (WCC), wireless communications, wired communications, or any combination thereof, or wherein the wire feeder is located remotely from the welding power supply and proximate to the welding torch, or wherein the welding torch includes a welding torch to perform a welding operation or a gouging torch to perform a gouging operation.

10. The welding power supply of claim 7, further comprising a first power conversion circuitry to condition the welding power for transmission to an electrode wire through the welding torch at an electrified contactor tip via the welding cable.

11. A welding wire feeder, comprising:
a first welding connection to receive welding power, communication signals, and wire feeder power from a welding power supply via a welding cable;
a second welding connection to provide the welding power or communication signals to a welding torch; and
first connection circuitry to transmit or receive wire feeder power and data to or from second connection circuitry of the welding power supply, the first connection circuitry and the second connection circuitry coupled via a single conductor wire feeder power and communication cable.

12. The welding wire feeder of claim 11, wherein the first connection circuitry includes first communication circuitry and first power conversion circuitry.

13. The welding wire feeder of claim 12, wherein the second connection circuitry includes second communication circuitry and second power conversion circuitry and optionally wherein the single conductor power and communication cable transmits wire feeder power to drive the wire feeder from the first power conversion circuitry to the second power conversion circuitry.

14. The welding wire feeder of claim 1, wherein the single metallic conductor comprises an 18 gauge conductor or a wire gauge similar to the weld cable.

15. The welding wire feeder of claim 1, further comprising a user interface and communication circuitry powered by the control power via the single conductor wire feeder power and communication cable.
